# EUROPEAN PATENT APPLICATION

(11) **EP 1 494 239 A2**
(43) Date of publication of application: **05.01.2005**
(21) Application number: 04006240.8
(22) Date of filing: 16.03.2004
(51) Int. Cl.: G11B 27/10

(54) **Optical disk apparatus and optical disk processing method**

(30) Priority: 05.06.2003 JP 2003161039
(71) Applicant: Kabushiki Kaisha Toshiba, Tokyo (JP)
(72) Inventor: Kawamura, Akira, Minato-ku, Tokyo 105-8001 (JP)
(74) Representative: Henkel, Feiler & Hänzel

(57) **Abstract**

An optical disk apparatus which can smoothly perform reproducing processing includes a detection unit (54), a fore-control unit (61), and a post-control unit (62). The detection unit detects information in VOBU (video object unit) which includes NV_PCK (navigation pack) and contents information in a plurality of chapters. The fore-control unit obtains one VOBU according to a reproducing direction, and writes absence of an address in a reserve area of NV_PCK to store the absence of the address with the contents information in a buffer when an address according to a current reproducing magnification is absent in NV_PCK. The post-control unit reads out NV_PCK, and recognizes NV_PCK as an end position of the chapter to direct readout of the next chapter to the fore-control unit when the address is absent.

## Description

The present invention relates to an optical disk apparatus, particularly to an optical disk recording and reproducing apparatus and an optical disk processing method, which perform double-speed readout .on the basis of management information (for example, navigation pack).

In recent years, the optical disk apparatus is improved and the optical disk apparatus becomes widespread. Even in technologies of this field, the higher-level technology is demanded. One of the demanded technologies of the filed is to perform smoothly reproduction, even in processing of reading out and reproducing contents of an optical disk not at one double speed but at high double speed. Utilization of a buffer memory is required for the reproduction of the contents at high speed.

In the prior art (Jpn. Pat. Appln. KOKAI Publication No. 2000-101970) concerned with the reproduction of the contents at high speed, there is disclosed a reproducing apparatus and reproducing method in which the backward reproduction is performed by utilizing the buffer memory. In Jpn. Pat. Appln. KOKAI Publication No. 2000-101970, data which has been read out from the optical disk and reproduced is stored in the buffer memory, and the data is properly read out from the buffer memory when the backward reproduction is required.

In the prior art, it is shown that the buffer memory is utilized in the case of the special reproduction. However, no specific solution is given to the following problem of the invention shown below.

That is, in the optical disk apparatus according to the invention, although contents information is read in each chapter in the buffer memory, all pieces of the contents information are not read in the buffer memory. For example, in the case of four double speed or eight double speed, the contents information is captured in the buffer memory in each reproducing unit (for example, VOBU (Video Object Unit)) of an address indicating management information such as navigation pack (NV_PCK). Even in the contents information which has read at one double speed, the contents information which is not read at four double speed is present.

The processing of reproducing the contents information is divided into capture processing which captures the contents information in the buffer by using a read buffer, a fore-control unit, and the like, and then the processing which reads out the contents information from the read buffer to encode the contents information by using the stream control unit and the like included in the encoder and the like. In the stream control unit, for example, when an end point of the contents information in one chapter is detected, an end position of one chapter is informed to the fore-control unit again. According to the information of the end position of one chapter, the fore-control unit resumes the readout of the contents information of the next chapter.

Thus, since the step of capturing the contents information in the fore-control unit and the step of encoding the contents information in the stream control unit of the post-control unit are performed at different timing, the following problem is generated by the user operation in the case where the reproducing speed is changed from the eight double speed to the one double speed in readout processing.

That is, even in the case where the reproducing speed is changed from the eight double speed to the one double speed in detecting the end position of the contents information in the stream control unit of the post-control unit, the contents information given from the read buffer becomes previous one which is read at the eight double speed. Therefore, while the stream control unit currently recognizes the reproducing speed as the one double speed, the stream control unit detects the end point of the contents information for the contents information which is read at eight double speed and fails the detection of the end point.

In order to avoid the above problem, it is necessary to restrict the processing such that the read operation of the next chapter is not performed until all the read buffers become empty when the reproducing speed is changed. However, since the restriction of the processing leads to decreases in the read speed and the reproducing speed, when the reproducing speed is changed during the reproduction, there is the problem that sufficient processing speed can not be obtained.

It is an object of the invention to provide the optical disk apparatus and the optical disk processing method which can smoothly perform processing to even a change in reproducing speed during reproduction without waiting time by performing the processing such as proper rewrite of management information in reproducing the optical disk.

The invention is an optical disk apparatus comprising a detection unit which detects one information unit in one of a plurality of areas from an optical disk which stores the plurality of information units including management information and contents information corresponding to the management information in the plurality of areas, a first control unit which stores the information unit in a buffer according to an address according to a current reproducing magnification in the management information, the first control unit writing absence of the address in a predetermined area of the management information to store the management information and the contents information in the buffer and standing by without obtaining the information unit until a start direction is given when the address of the next information unit to be obtained is absent, a second control unit which reads out the management information and the contents information stored in the buffer, and gives the start direction to the first control unit in order to start to obtain information of the next area in the optical disk when the address is absent in the predetermined area of the management information, and a reproducing unit which decodes and reproduces the contents information read out from the buffer by control of the second control unit.

In the invention, the fore-control unit (first control unit) writes the address of the contents to be searched next according to the reproducing speed such as four double speed in a reserve area of the management information such as NV_PCK. The post-control unit (second control unit) such as a stream control unit of an encoder confirms whether the address of the contents to be searched next is present in the reserve area of the management information such as NV_PCK or not. When the address of the contents to be searched next is present, the post-control unit decides that the contents information is not ended. When the address of the contents to be searched next is absent, the post-control unit decides that the contents information is ended. When the post-control unit decides that the contents information is ended, the post-control unit gives the start direction of contents information of the next chapter to the fore-control unit (first control unit).

In the optical disk apparatus according to the invention, the control of obtaining the contents information and the decision of the end of contents information are performed in the above-described way. As a result, even in the case where the reproducing speed is changed during the reproduction, the end position is always correctly decided, and it is not necessary to take measures such that the read buffer becomes empty in each chapter, so that the reproducing processing can be smoothly performed.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration of an optical disk apparatus which is of an embodiment of the invention;
FIG. 2 is an explanatory view for explaining read operation of the optical disk apparatus which is of an embodiment of the invention;
FIG. 3 is a view showing one of examples of management information treated by the optical disk apparatus which is of an embodiment of the invention;
FIG. 4 is a flow chart showing one of processing operations of a fore-control unit which is of the optical disk apparatus according to a first embodiment of the invention;
FIG. 5 is a flow chart showing one of processing operations of a post-control unit which is of the optical disk apparatus according to the first embodiment of the invention;
FIG. 6 is a flow chart showing one of processing operations of the fore-control unit which is of the optical disk apparatus according to a second embodiment of the invention;
FIG. 7 is a flow chart showing one of processing operations of the post-control unit which is of the optical disk apparatus according to the second embodiment of the invention;
FIG. 8 is a flow chart showing one of processing operations of the fore-control unit which is of the optical disk apparatus according to a third embodiment of the invention; and
FIG. 9 is a flow chart showing one of processing operations of the post-control unit which is of the optical disk apparatus according to the third embodiment of the invention.

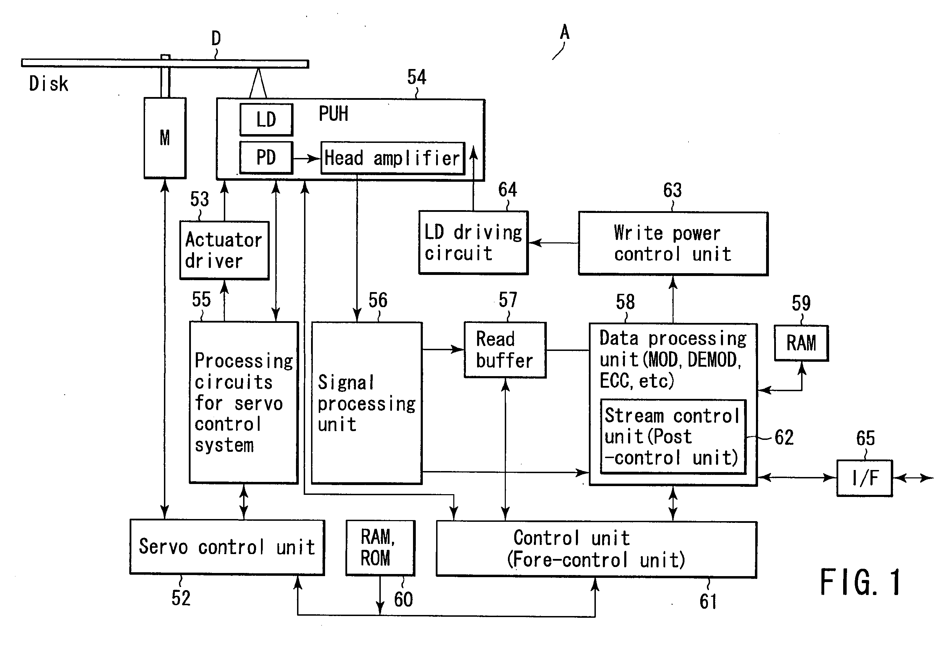

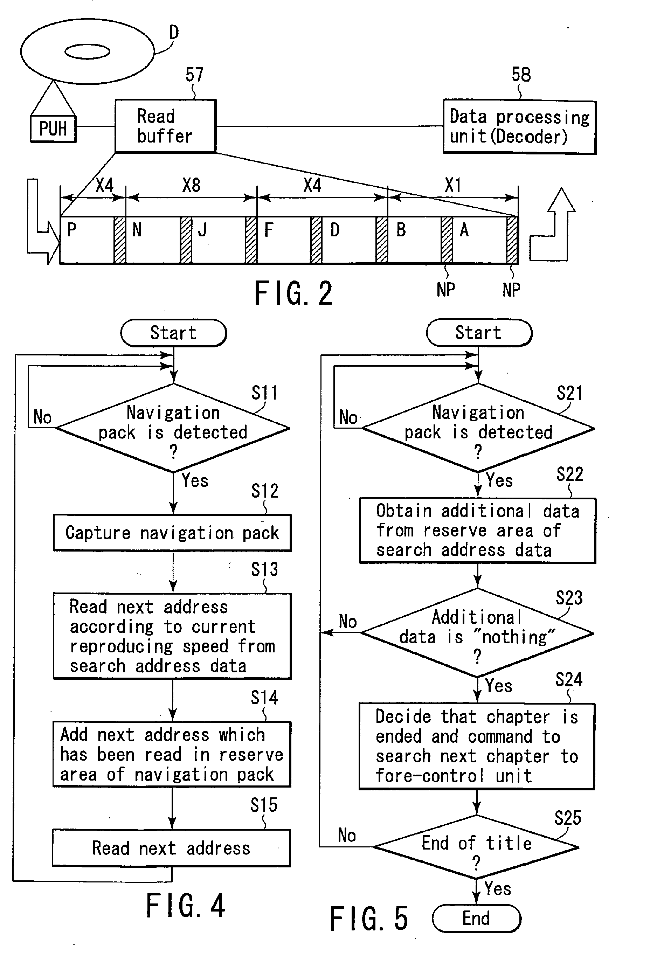

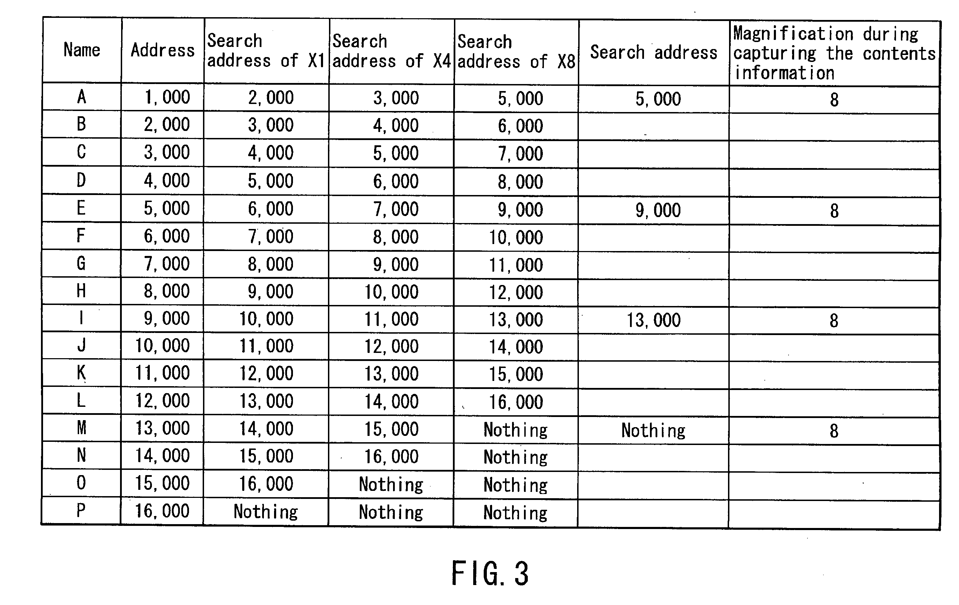

Referring to the accompanying drawings, the optical disk apparatus which is of an embodiment of the invention will be described in detail below. FIG. 1 is a block diagram showing a configuration of the optical disk apparatus which is of an embodiment of the invention, FIG. 2 is an explanatory view for explaining read operation, and FIG. 3 shows one of examples of management information treated by the optical disk apparatus which is of an embodiment of the invention.

### [Optical Disk Apparatus according to the Invention] (Basic Configuration and Operation)

In FIG. 1, an optical disk apparatus A which is of an embodiment of the invention includes a ROM and a RAM 60 which are a storage area and a control unit 61 which controls overall operation and the like. The optical disk apparatus A also includes a rotary motor M which rotates an optical disk D at predetermined number of revolutions and a servo control unit 52. Further, the optical disk apparatus A includes a pickup head PUH which writes information in the optical disk D and reads out the information from the optical disk D. The pickup head PUH includes an objective lens L, a photodetector PD such as a four-channel photodetector and a laser diode LD which emits a laser beam, and head amplifier.

The servo control unit 52 is connected to processing circuits of servo control system 55. The processing circuits of servo control system 55 include an objective lens guiding circuit, a focus control circuit, an objective lens driving signal switch, an objective lens driving circuit, a wobble (WB) signal detector and the like, which are not shown. The processing circuits of servo control system 55 perform focus retracting operation and the like.

The optical disk apparatus A also includes a signal processing unit 56 to which a detection signal is supplied from the photodetector PD of the pickup head PUH and a read buffer 57 which perform modulating/demodulating processing or ECC processing to a signal to be recorded which is given from the outside or the detection signal detected by the pickup head PUH. The data processing unit 58 is connected to a RAM 59 which provides a working area and an interface (I/F) 65 which exchanges the signal between the optical disk apparatus A and an external device.

In the above configuration, the control unit 61 uses the RAM 60 as the working area and performs the predetermined operation according to a program including the invention which is recorded in the RAM 60. The optical disk D is irradiated with a light beam output from the pickup head PUH. The reflected light beam from the optical disk D is converted into an electric signal by the head amplifier. The electric signal is stored in the read buffer 57 through the data processing unit 56, and then input to the data processing unit 58.

The objective lens guiding circuit, the focus control circuit, the objective lens driving signal switch, the objective lens driving circuit, the wobble (WB) signal detector, and the like, which are not shown and are includes in the processing circuits of servo control system 55, perform the focus retracting operation and the like.

In data writing operation, by using a write clock generated by a write channel circuit (not shown), the data processing unit 58 adds an error detection code (EDC) and an ID to the data transmitted through the I/F 25, performs data scramble processing to the data in order to stabilize the servo, adds an error correction code (ECC) to the data, and adds a synchronizing signal to the data. Further, the data processing unit 58 modulates the signals except the synchronizing signal and transmits the signals except the synchronizing signal to a write power control unit 63. The signals except the synchronizing signal are written in the optical disk D through a laser diode driving circuit 64 by optimum write strategy for the corresponding medium.

In data readout operation, the detection signal from the pickup head PUH is amplified by the signal processing unit 56 and transmitted to the read buffer 57 through an optimum equalizer. Channel data is read in the read buffer 57 with a readout clock generated by a PLL circuit (not shown). In the data which has been read, synchronized symbol data is read out by the data processing unit 58. Then, error correction processing and disk scramble processing are performed, and the data is transferred to the external device or the like through the I/F 65.

In the optical disk apparatus having the above basic structure and basic function, the processing of obtaining and reproducing the stored information in the case of a change in the reproducing speed during the reproducing processing, which is of the embodiment of the invention is considered, will be described in detail by using the flow chart.

### [Optical Disk Apparatus according to First Embodiment]

A first embodiment is the optical disk apparatus and the optical disk processing method in which the fore-control unit writes the next search address in management information such as NV_PCK and the post-control unit detects absence of the search address in the management information and decides an end of a chapter to transfer to capture of the next chapter.

### (Reason for Processing Delay)

The optical disk apparatus according to the embodiment of the invention is one which shows a procedure of performing smoothly capture processing of contents information. In the optical disk apparatus, the contents information is read in the buffer memory in each chapter. However, in the case of high double-speed, all pieces of the contents information are not read.

FIG. 2 shows a state in which the optical disk apparatus A reads some of VOBUs in a plurality of VOBUs from VOBU_A to VOBU_P into the read buffer 57 while other VOBUs are properly skipped by high-speed readout. The capture processing into the read buffer 57 is performed by the control unit 61 which is of the fore-control unit shown in FIG. 1, and the processing of deciding the final VOBU in the chapter is performed by the stream control unit 62 which is of the post-control unit.

FIG. 3 shows address information in each VOBU. As shown in FIG. 2, the address information is included in a navigation pack (NV_PCK) NP which is of the management information arranged in a front end of each VOBU. For example, in the address information of VOBU_A, FIG. 3 shows that the address of VOBU_A is 1000, the address of the next VOBU is 2000 in the case where the reproduction is performed in one double speed, the address of the second next VOBU is 3000 in the case where the reproduction is performed in four double speed, and the address of the next VOBU is 5000 in the case where the reproduction is performed in eight double speed.

As shown in FIG. 2 and FIG. 3, when the double speed is initially selected, as shown in the address information of VOBU A shown in FIG. 3, it is known that the next VOBU is VOBU_B having the address of 2000 which is the search address of X1. When the four double speed is selected next in VOBU_B, VOBU_D having the address of 4000 which is of the search address of X4 is selected. Then, VOBU_F is selected in the same way. When the eight double speed is selected next in VOBU_J, VOBU_N having the address of 10000 which is of the search address of X8 is selected. Then, VOBU_N is selected in the same way. Under control of the control unit 61 which is of the fore-control unit, these VOBUs are read by the action of the pickup head PUH and stored in the read buffer 57.

The processing of reproducing the contents information is mainly divided into tow steps, i.e. the capture processing which captures the contents information in the buffer by using the read buffer, the fore-control unit, and the like, and then the processing which reads out the contents information from the read buffer to encode the contents information by using the stream control unit and the like included in the encoder and the like. In the stream control unit 62, for example, when an end point of the contents information in one chapter is detected, an end position of one chapter is informed to the fore-control unit 61. According to the information of the end position of one chapter, the fore-control unit 61 resumes the readout of the contents information of the next chapter.

Thus, since the step of capturing the contents information in the fore-control unit and the step of encoding the contents information in the stream control unit of the post-control unit are performed at different timing, the following problem is generated by the user operation in the case where the reproducing speed is changed from the eight double speed to the one double speed in readout processing.

That is, even in the case where the reproducing speed is changed from the eight double speed to the one double speed in detecting the end position of the contents information in the stream control unit of the post-control unit, the contents information given from the read buffer becomes previous one which is read at the eight double speed. Therefore, while the stream control unit 62 currently recognizes the reproducing speed as the one double speed, the stream control unit 62 detects the end points of the contents information for the contents information which is read at eight double speed and fails the detection of the end point.

In order to avoid the above problem, it is necessary to restrict the processing such that the read operation of the next chapter is not performed until all the read buffers become empty when the reproducing speed is changed (or even if the reproducing speed is not changed). However, since the restriction of the processing leads to decreases in the read speed and the reproducing speed, delay of the reproducing processing occurs or the reproduction is not smoothly performed.

As described below, the first embodiment is one in which the fore-control unit writes the next search address in management information such as NV_PCK and the post-control unit detects absence of the search address in the management information and decides an end of a chapter to transfer to capture of the next chapter. Accordingly, since it is not necessary to capture the contents information after the read buffers become empty in each chapter, the read processing and reproducing processing can be smoothly performed at high speed.

### (Specific Processing Method)

FIG. 4 is the flow chart showing one of processing operations of the fore-control unit which is of the optical disk apparatus according to the first embodiment of the invention, and FIG. 5 is the flow chart showing one of processing operations of the post-control unit.

In the flow chart shown in FIG. 4, when reproducing direction is received, the reflected light beam of the laser beam emitted from the pickup head PUH is received with the photodetector PD under the control of the control unit 61 of the fore-control unit, the detection signal according to the reflected light beam received with the photodetector PD is processed by the signal processing unit and the like through the head amplifier, and then the initial VOBU is supplied to the read buffer. As described later in a third embodiment, it is preferable to obtain the address information (address of the contents information of one chapter) which is of chapter management information in each chapter. When NV_PCK of the initial VOBU is detected (S11), NV_PCK of the initial VOBU is captured in the RAM 60 of the working memory or the like (S12), and the address of VOBU to be searched next according to the current reproducing speed (one double speed, four double speed, eight double speed, and the like) is read from the address information in NV_PCK (S13).

At this point, when the eight double speed is selected, as shown in FIG. 3, the address of "5000" is additionally written in a reserve area of the address information as the search address (S14). Then, VOBU_E indicated by "5000" of the search address is detected. The processing operation returns to step S11 as long as the search address is continued, and the processing is repeated until the contents information in the chapter is completely captured.

When the search address becomes lost, in step S14, absence of the search address is written in the reserve area, and it is preferable that data of "FF" is written in the reserve area. Accordingly, when the search address becomes lost, the processing is in a standby state for waiting a read start direction from the stream control unit 62 of the post-control unit.

In the flow chart shown in FIG. 5, the stream control unit 62 of the post-control unit sequentially reads VOBU stored in the read buffer 57 and performs the control of the reproducing processing such as encode processing. At the same time, the stream control unit 62 decides whether VOBU is the end of the chapter or not. When the stream control unit 62 decides that VOBU is the end of the chapter, the stream control unit 62 gives the read start direction of the next chapter to the control unit 61 of the fore-control unit.

When NV_PCK is detected (S21), the search address which is of an additional address is read out from the reserve area of the address information in NV_PCK (S22). At this point, when the usual address is present, since it is not an end position, the processing operation returns to step S21 and the stream control unit 62 continues the processing of the next VOBU. When the state in which the address is absent is detected, e.g. when a value such as the above address of "FF" (any information to indicate the end position) is detected (S23), the stream control unit 62 decides that the chapter is ended and gives the start direction to the fore-control unit 61 so that the fore-control unit 61 starts to capture the next chapter (S24). The processing is continued until, e.g. a title end is detected (S25).

The search address is managed by utilizing the reserve area of the address information of NV_PCK with the fore-control unit 61 and the post-control unit 62. As a result, even if a user changes the reproducing speed through the reproduction, the post-control unit 62 never fails recognition of the end position, so that it is not necessary to take measures such that the read buffer 57 empty in each chapter. Therefore, the reproducing processing can be very smoothly performed.

### [Optical Disk Apparatus according to Second Embodiment]

A second embodiment is the optical disk apparatus and the optical disk processing method in which the fore-control unit writes reproducing magnification during capturing the contents information in the management information such as NV_PCK and the post-control unit searches the search address from NV_PCK in accordance with the reproducing magnification during capturing the contents information, detects absence of the search address in the management information, and decides the end of the chapter to transfer to the capture of the next chapter.

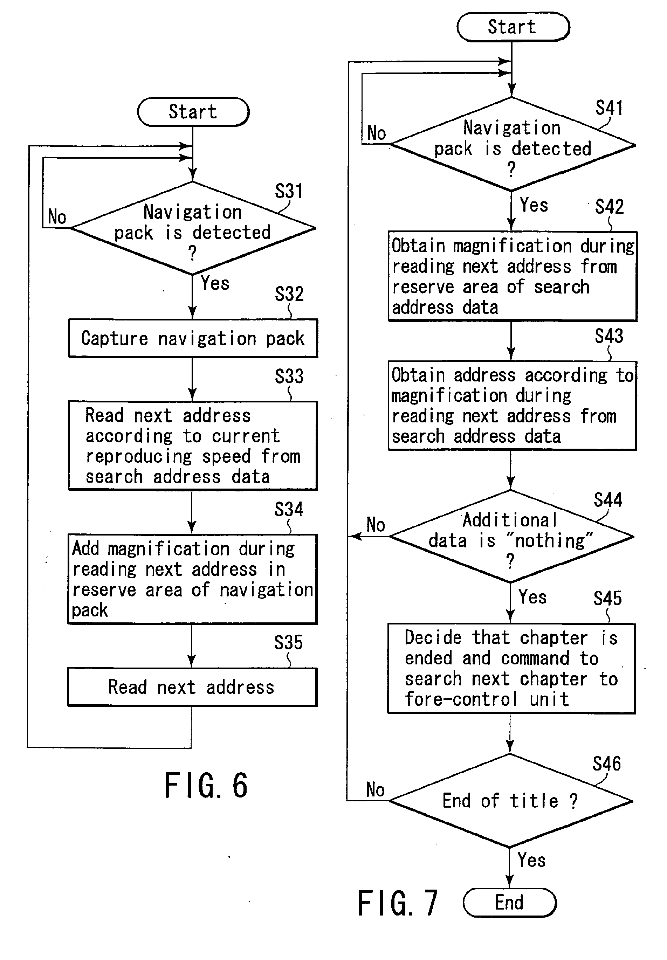

FIG. 6 is the flow chart showing one of processing operations of the fore-control unit which is of the optical disk apparatus according to the second embodiment of the invention, and FIG. 7 is the flow chart showing one of processing operations of the post-control unit.

In the flow chart shown in FIG. 6, when the reproducing direction is received, the reflected light beam of the laser beam emitted from the pickup head PUH is received with the photodetector PD under the control of the control unit 61 of the fore-control unit, the detection signal according to the reflected light beam received with the photodetector PD is processed by the signal processing unit 56 and the like through the head amplifier, and then the initial VOBU is supplied to the read buffer. When NV_PCK of the initial VOBU is detected (S31), NV_PCK of the initial VOBU is captured in the RAM 60 of the working memory or the like (S32), and the address of VOBU to be searched next according to the current reproducing speed (one double speed, four double speed, eight double speed, and the like) is read from the address information in NV_PCK (S33).

At this point, when the eight double speed is selected, as shown in FIG. 3, the eight double speed, e.g. "8" is additionally written in the reserve area of the address information (S34). Then, VOBU_E indicated by "5000" of the search address is detected. The processing operation returns to step S11 as long as the search address is continued, and the processing is repeated until the contents information in the chapter is completely captured. When the search address becomes lost, the processing is in the standby state for waiting the read start direction from the stream control unit 62 of the post-control unit.

In the flow chart shown in FIG. 7, the stream control unit 62 of the post-control unit sequentially reads VOBU stored in the read buffer 57 and performs the control of the reproducing processing such as encode processing. At the same time, the stream control unit 62 decides whether VOBU is the end of the chapter or not. When the stream control unit 62 decides that VOBU is the end of the chapter, the stream control unit 62 gives the read start direction of the next chapter to the control unit 61 of the fore-control unit.

When NV_PCK is detected (S41), the reproducing magnification during capturing the contents information is read out from the reserve area of the address information in NV_PCK (S42). The address according to the reproducing magnification is obtained from the address information in NV_PCK shown in FIG. 3 (S43). At this point, when the usual address is present, since it is not an end position, the processing operation returns to step S41 and the stream control unit 62 continues the processing of the next VOBU. When the state in which the address is absent is detected, e.g. when the value such as the above address of "FF" (any information to indicate the end position) is detected (S44), the stream control unit 62 decides that the chapter is ended and gives the start direction to the fore-control unit 61 so that the fore-control unit 61 starts to capture the next chapter (S45). The processing is continued until, e.g. the title end is detected (S46).

The reproducing magnification during capturing the contents information is managed by utilizing the reserve area of the address information of NV_PCK with the fore-control unit 61 and the post-control unit 62. As a result, even if the user changes the reproducing speed through the reproduction, the post-control unit 62 never fails recognition of the end position, so that it is not necessary to take measures such that the read buffer 57 empty in each chapter. Accordingly, similarly to the first embodiment, even in the second embodiment, the problem that the reproduced image is frozen can be eliminated and the reproducing processing can be very smoothly performed.

### [Optical Disk Apparatus according to Third Embodiment]

A third embodiment is the optical disk apparatus and the optical disk processing method in which the fore-control unit additionally writes the final contents information (VOBU) of the chapter in a back end of the image of the chapter in accordance with the management information such as NV_PCK and the post-control unit decides the end of the chapter to transfer to the capture of the next chapter when the post-control unit monitors the address of the one double speed of NV_PCK and the like to detect the final image.

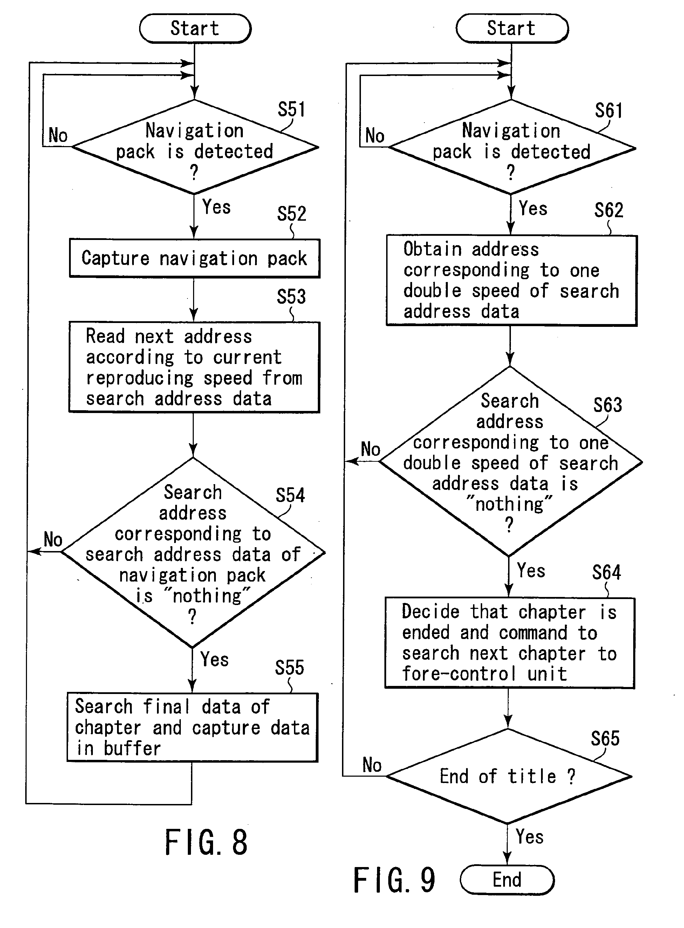

FIG. 8 is the flow chart showing one of processing operations of the fore-control unit which is of the optical disk apparatus according to the third embodiment of the invention, and FIG. 9 is the flow chart showing one of processing operations of the post-control unit.

In the flow chart shown in FIG. 8, when the reproducing direction is received, the reflected light beam of the laser beam emitted from the pickup head PUH is received with the photodetector PD under the control of the control unit 61 of the fore-control unit, the detection signal according to the reflected light beam received with the photodetector PD is processed by the signal processing unit 56 and the like through the head amplifier, and then the initial VOBU is supplied to the read buffer. At this point, the address information (address of the contents information of one chapter) which is of the chapter management information in each chapter is obtained. When NV_PCK of the initial VOBU is detected (S51), NV_PCK of the initial VOBU is captured in the RAM 60 of the working memory or the like (S52), and the address of VOBU to be searched next according to the current reproducing speed (one double speed, four double speed, eight double speed, and the like) is read from the address information in NV_PCK (S53) .

Then, VOBU_E indicated by "5000" of the search address is detected. The processing operation returns to step S11 as long as the search address is continued, and the processing is repeated until the contents information in the chapter is completely captured (S54).

When the search address becomes "nothing", the final contents information (VOBU) of the chapter, i.e. the contents information of VOBU_P shown in FIG. 3 is obtained by the chapter management information in each chapter, which has been initially obtained, and the contents information of VOBU_P is added to the back end of the contents information which has already been obtained (S55). Then, the processing is in the standby state for waiting the read start direction from the stream control unit 62 of the post-control unit.

In the flow chart shown in FIG. 9, the stream control unit 62 of the post-control unit sequentially reads VOBU stored in the read buffer 57 and performs the control of the reproducing processing such as encode processing. At the same time, the stream control unit 62 decides whether VOBU is the end of the chapter or not. When the stream control unit 62 decides that VOBU is the end of the chapter, the stream control unit 62 gives the read start direction of the next chapter to the control unit 61 of the fore-control unit.

When NV_PCK is detected (S61), the address information corresponding to the one double speed of the address information in NV_PCK is obtained (S62). When the address corresponding to the one double speed is the usual address, since it is not the end position, the processing operation returns to step S61 and the stream control unit 62 continues the processing of the next VOBU. When the state in which the address is absent is detected, e.g. when the value such as the above address of "FF" (any information to indicate the end position) is detected (S63), the stream control unit 62 decides that the chapter is ended and gives the start direction to the fore-control unit 61 so that the fore-control unit 61 starts to capture the next chapter (S64). The processing is continued until, e.g. the title end is detected (S65).

The fore-control unit 61 adds the contents information of the final VOBU of the chapter to the back end of the read information and the post-control unit 62 continues to monitor "nothing" of search address of the address information of the one double speed in NV_PCK. As a result, even if the user changes the reproducing speed through the reproduction, the post-control unit 62 never fails recognition of the end position, so that it is not necessary to take measures such that the read buffer 57 empty in each chapter. Accordingly, similarly to the first and second embodiments, the problem that the reproduced image is frozen can be eliminated and the reproducing processing can be very smoothly performed.

Those skilled in the art could realize the invention by the various embodiments described above. Further, various modifications of the embodiments could be easily conceived by those skilled in the art, and the invention could be applied to various embodiments without any inventive ability. Therefore, it is to be understood that the invention covers the broad scope which is consistent with the disclosed principle and the novel feature and the invention is not limited to the above-described embodiments.

As described in detail above, the invention uses the method in which the management of the search address is performed in the reserve area of the management information such as NV_PCK by the fore-control unit and the post-control unit. As a result, even in the case where the reproducing speed is changed during the reproduction, the end position is always correctly decided, and it is not necessary to take measures such that the read buffer 57 becomes empty in each chapter, so that the optical disk apparatus and the optical disk processing method in which the reproducing processing is smoothly performed can be provided.

## Claims

1. An optical disk apparatus **characterized by** comprising:
a detection unit (54) which detects one information unit in one of a plurality of areas from an optical disk which stores said plurality of information units including management information and contents information corresponding to the management information in said plurality of areas;
a reading unit (61 and 62) which stores the information unit including the management information and the contents information in a buffer (57) and performs control in order to read the information unit from the buffer at predetermined timing; and
a reproducing unit (58) which decodes and reproduces the contents information read out from the buffer by control of the reading unit.

2. An optical disk apparatus according to claim 1, **characterized in that** the reading unit includes;
a first control unit (61) which stores the information unit in the buffer (57) according to an address according to a current reproducing magnification in the management information, the first control unit writing absence of the address in a predetermined area of the management information to store the management information and the contents information in the buffer (57) and standing by without obtaining the information unit until a start direction is given when the address of the next information unit to be obtained is absent, and
a second control unit (62) which reads out the management information and the contents information stored in the buffer, and gives the start direction to the first control unit in order to start to obtain information of the next area in the optical disk when the address is absent in the predetermined area of the management information.

3. An optical disk apparatus according to claim 2, **characterized in that** the area is a chapter, the information unit is VOBU, and the management information is NV_PCK.

4. An optical disk apparatus according to claim 2, **characterized in that** the predetermined area of the management information is a reserve area.

5. An optical disk apparatus according to claim 1, **characterized in that** the reading unit includes:
a first control unit (61) which writes a reproducing magnification during detection in a predetermined area of the management information included in the information unit, stores the management information and the contents information in the buffer (57), and stands by without obtaining the information unit until a start direction is given when the address of the next information unit to be obtained is absent; and
a second control unit (62) which reads out the management information and the contents information stored in the buffer, reads out the reproducing magnification during detection from the predetermined area of the management information, and gives the start direction to the first control unit in order to start to obtain information of the next area in the optical disk when the address is absent in the predetermined area of the management information.

6. An optical disk apparatus according to claim 5, **characterized in that** the area is a chapter, the information unit is VOBU, and the management information is NV_PCK.

7. An optical disk apparatus according to claim 5, **characterized in that** the predetermined area of the management information is a reserve area.

8. An optical disk apparatus according to claim 1, **characterized in that** the reading unit includes:
a first control unit (61) which stores the management information and the contents information included in the information unit in the buffer (57), the first control unit obtaining the final information unit of the area by using the detection unit, and storing the final information unit of the area in the buffer (57) to stand by without obtaining the information unit until a start direction is given when the address of the next information unit to be obtained is absent; and
a second control unit (62) which reads out the management information and the contents information stored in the buffer, and gives the start direction to the first control unit in order to start to obtain information of the next area in the optical disk when the address according to one double speed in the management information is absent in the management information.

9. An optical disk apparatus according to claim 8, **characterized in that** the area is a chapter, the information unit is VOBU, and the management information is NV_PCK.

10. An optical disk apparatus according to claim 8, **characterized in that** the first control unit obtains the address of the final information unit of the area by area management information about said plurality of areas obtained from the optical disk with the detection unit, and the final information unit of the area is obtained according to the address of the final information unit of the area by using the detection unit.

11. An optical disk processing method **characterized by** comprising:
obtaining one information unit in one of a plurality of areas according to a reproducing direction from an optical disk which stores said plurality of information units including management information and contents information corresponding to the management information in said plurality of areas;
storing the information unit including the management information and the contents information in a buffer and reading the information unit from the buffer at predetermined timing; and
decoding and reproducing the contents information read out from the buffer.

12. An optical disk processing method according to claim 11, **characterized in that** the reading includes:
storing the information unit in a buffer (57) according to an address according to a current reproducing magnification in the management information, writing absence of the address in a predetermined area of the management information to store the management information and the contents information in the buffer (57), and standing by without obtaining the information unit until a start direction is given when the address of the next information unit to be obtained is absent; and
reading out the management information and the contents information stored in the buffer, and giving the start direction in order to start to obtain information of the next area in the optical disk when the address is absent in the predetermined area of the management information.

13. An optical disk processing method according to claim 11, **characterized in that** the area is a chapter, the information unit is VOBU, and the management information is NV_PCK.

14. An optical disk processing method according to claim 11, **characterized in that** the predetermined area of the management information is a reserve area.

15. An optical disk processing method according to claim 11, **characterized in that** the reading includes:
writing a reproducing magnification during detection in a predetermined area of the management information included in the information unit, storing the management information and the contents information in a buffer (57), and standing by without obtaining the information unit until a start direction is given when the address of the next information unit to be obtained is absent; and
reading out the management information and the contents information stored in the buffer, reading out the reproducing magnification during detection from the predetermined area of the management information, and giving the start direction in order to start to obtain information of the next area in the optical disk when the address is absent in the predetermined area of the management information.

16. An optical disk processing method according to claim 15, **characterized in that** the area is a chapter, the information unit is VOBU, and the management information is NV_PCK.

17. An optical disk processing method according to claim 15, **characterized in that** the predetermined area of the management information is a reserve area.

18. An optical disk processing method according to claim 11, **characterized in that** the reading includes:
storing the management information and the contents information included in the information unit in a buffer (57), obtaining the final information unit of the area by using the detection unit, and storing the final information unit of the area in the buffer to stand by without obtaining the information unit until a start direction is given when the address of the next information unit to be obtained is absent; and
reading out the management information and the contents information stored in the buffer, and giving the start direction in order to start to obtain information of the next area in the optical disk when the address according to one double speed in the management information is absent in the management information.

19. An optical disk processing method according to claim 18, **characterized in that** the area is a chapter, the information unit is VOBU, and the management information is NV_PCK.

20. An optical disk processing method according to claim 18, **characterized in that** the address of the final information unit of the area is obtained by area management information about said plurality of areas obtained from the optical disk with the detection unit, and the final information unit of the area is obtained according to the address of the final information unit of the area.
